# EUROPÄISCHE PATENTANMELDUNG

(11) **EP 0 696 752 A2**
(43) Veröffentlichungstag der Anmeldung: **14.02.1996**
(21) Anmeldenummer: 95111642.5
(22) Anmeldetag: 25.07.1995
(51) Int. Cl.: G02B 19/00, F21V 5/00

(54) **Telezentrisches Beleuchtungssystem**

(30) Priorität: 09.08.1994 DE 4428188
(71) Anmelder: JENOPTIK Technologie GmbH, D-07745 Jena (DE)
(72) Erfinder: Behr, Lothar, D-07745 Jena (DE); Kühm, Matthias, D-07747 Jena (DE)

(57) **Zusammenfassung**

Die Erfindung betrifft ein telezentrisches Beleuchtungssystem bestehend aus einer Lichtquelle, einem Tubus und einer Optik, wobei die Lichtquelle als Ulbrichtsche Kugel mit einer streuenden und wenig selektiven Innenbeschichtung ausgebildet ist, die mindestens eine an sich bekannte LED zum Einkoppeln der Lichtenergie aufweist. Die LED's besitzen dabei eine plangeschliffene und mattierte Austrittsöffnung zur Erzielung eines großen Öffnungswinkels und die Optik besteht aus einer asphärischen Fresnellinse, wobei der Brennpunkt in der Austrittsblende der Ulbrichtschen Kugel liegt.

## Beschreibung

Die Erfindung betrifft ein telezentrisches Beleuchtungssystem und wird vorzugsweise in optische oder optoelektronische Aufnahmekanäle mit telezentrischen Optiken eingesetzt.

Bekannt sind telezentrische Beleuchtungssysteme, die aus einer aufwendigen Kombination von Lichtquelle, Filter, Homogenisator, Kollektor und Kondensor aufgebaut sind sowie nichttelezentrische Durchlichtbeleuchtungen, die vorwiegend aus einer oder mehreren Lichtquellen und einem streuendem System (eine Glasplatte mit definierten streuenden Eigenschaften) bestehen. Diese Beleuchtungseinrichtungen setzen einen hohen Energieaufwand (Lichtquelle) voraus, der unter anderem eine hohe Verlustleistung (Wärmeentwicklung) mit sich bringt. Weitere Nachteile sind deren relativ große optische Baulänge und der relativ hohe Fertigungs-, Montage- und Justieraufwand.
Aus der DE PS 25 03 14 ist eine Beleuchtungseinrichtung für Projektionsapparate bekannt, bei welcher in einem kugelartig ausgebildeten Hohlkörper, der mit diffus reflektierenden Innenflächen versehen ist, mindestens eine Lichtquelle angeordnet ist. Damit wird gegenüber dem damaligen Stand der Technik erreicht, daß das gesamte von den Lichtquellen ausgestrahlte Licht nach Reflexion zur diffusen Beleuchtung des zu projizierenden Gegenstandes ausgenutzt wird.
Aus dem DE G 92 04 063 ist eine Hintergrundleuchte bekannt, bei welcher zur Schaffung einer diffusen Ausleuchtung eines Objektfeldes um einem mit reflektierenden Schichten versehenen transparenten Körper lichtemittierende Dioden angeordnet sind. Zur Einkopplung der gesamten Diodenstrahlung sind die Dioden als Flachelemente ausgebildet und stehen in unmittelbarem Kontakt mit dem transparenten Körper.
Die Anordnung einer Fresnellinse hinter einer Lichtquelle zur Schaffung einer Beleuchtung mit parallelem Licht ist z.B. aus dem DE G 92 04 063.2 bekannt. Sämtlich genannte Lösungen sind nicht geeignet um eine Durchlichtbeleuchtung zu erzielen, die höchsten Anforderungen an eine homogene und telezentrische Ausleuchtung eines Objektfeldes genügt.

Aufgabe der Erfindung ist es, ein telezentrisches Beleuchtungssystem zu schaffen, mit dem unter geringem Aufwand eine telezentrische und homogene Durchlichtbeleuchtung mit großem Felddurchmesser erreicht wird.

Erfindungsgemäß wird die Aufgabe mit einem telezentrischem Beleuchtungssystem bestehend aus einer Lichtquelle, einem Tubus und einer Optik gelöst, wobei die Lichtquelle als Ulbrichtsche Kugel mit einer streuenden und wenig selektiven Innenbeschichtung, vorzugsweise als Halbkugel, ausgebildet ist, die mindestens eine an sich bekannte LED zum Einkoppeln der Lichtenergie aufweist und die LED's eine plangeschliffene und mattierte Austrittsöffnung zur Erzielung eines großen Öffnungswinkels besitzen, sowie die Optik aus einer asphärischen Fresnellinse besteht, wobei der Brennpunkt in der Austrittsblende der Ulbrichtschen Kugel liegt. Günstig ist es, ein Vielfaches von vier LED's anzuordnen, wobei eine stochastische Verteilung optimal ist, da jede strukturierte Anordnung trotz Streuung an der Innenoberfläche wieder abgebildet wird. Um Alterungserscheinungen oder Betriebsspannungsschwankungen entgegenzutreten ist es günstig, zusätzlich einen optoelektronischen Sensor anzuordnen, der mit einer Regelungsschaltung verknüpft ist. Die Regelungsschaltung veranlaßt sodann beim Feststellen von Schwankungen die Kompensation über die LED's.

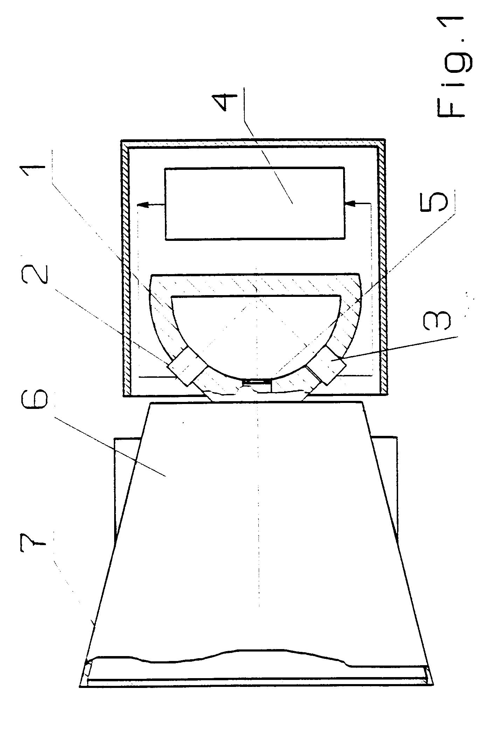

Die vorliegende Erfindung soll anhand eines Ausführungsbeispiels näher erläutert werden. Die dazugehörige Zeichnung veranschaulicht gemäß
- Fig. 1: eine erfindungsgemäße schematische Anordnung eines telezentrischen Beleuchtungssystems.

Figur 1 zeigt als seine wesentlichen Bestandteile eine Ulbrichtsche Halbkugel 1 mit einer LED 2, einem Sensor 3 und einer Blende 5, eine Regelungsschaltung 4, einen Tubus 6 sowie der Fresnellinse 7. Die Innenoberfläche der Halbkugel 1 besitzt eine streuende und wenig selektive Schicht. Als günstig erweist es sich, wenn in nicht dargestellter Form ein Vielfaches von vier LED's auf einer oder mehreren Kreisbahnen der Halbkugel 1 angeordnet sind, um ein gleichmäßiges Einkoppeln der Lichtenergie zu gewährleisten. Die zum Einsatz kommenden LED's 2 weisen durch Planschleifen und mattieren der Austrittsöffnung einen großen Öffnungswinkel (nahe 180°) auf. Die LED's 2 werden bündig zur Innenoberfläche der Halbkugel 1 angeordnet, um unerwünschte Reflexionen an den Zylinderoberflächen der LED's 2 zu vermeiden. Die Strahlungsenergie im Innern der Halbkugel 1, die durch Alterung der LED's 2 oder Veränderung des Streugrades der Innenschicht oder Schwankungen der Betriebsspannung ergeben können, wird durch den Sensor 3 überwacht und durch die Regelungsschaltung 4 über die Verbindung zu den LED's 2 kompensiert. Der Sensor 3 wird dabei geometrisch ebenso wie eine beliebige LED 2 angeordnet. Im vorliegenden Fall anstelle einer LED. Die homogene monochromatische Strahlung wird durch die Blende 5, die die Apertur des Systems bestimmt, in den Tubus 6 ausgekoppelt. Durch die nachfolgende Fresnellinse 7 wird ein telezentrischer Strahlenverlauf erreicht, wobei der Brennpunkt der Fresnellinse 7 in der Blende 5 liegt.

## Patentansprüche

1. Telezentrisches Beleuchtungssystem bestehend aus einer Lichtquelle, einem Tubus und einer Optik, wobei
- die Lichtquelle als Ulbrichtsche Kugel mit einer streuenden und wenig selektiven Innenbeschichtung ausgebildet ist, die mindestens eine an sich bekannte LED (2) zum Einkoppeln der Lichtenergie aufweist,
- die LED's (2) eine plangeschliffene und mattierte Austrittsöffnung zur Erzielung eines großen Öffnungswinkels besitzen,
- die Optik aus einer asphärischen Fresnellinse (7) besteht, wobei der Brennpunkt in der Austrittsblende der Ulbrichtschen Kugel liegt.

2. Telezentrisches Beleuchtungssystem nach Anspruch 1, dadurch gekennzeichnet, daß die Ulbrichtsche Kugel als Halbkugel (1) ausgebildet ist.

3. Telezentrisches Beleuchtungssystem nach Anspruch 1, dadurch gekennzeichnet, daß die Anzahl der LED's (2) ein Vielfaches von vier ist

4. Telezentrisches Beleuchtungssystem nach Anspruch 3, dadurch gekennzeichnet, daß die LED's (2) aufmindestens einer Kreisbahn angeordnet sind.

5. Telezentrisches Beleuchtungssystem nach Anspruch 3, dadurch gekennzeichnet, daß die LED's (2) stochastisch verteilt angeordnet sind.

6. Telezentrisches Beleuchtungssystem nach Anspruch 1, dadurch gekennzeichnet, daß ein elektrooptischer Sensor (3) und eine Regelungsschaltung (4) vorhanden sind, wobei die Regelungsschaltung (4) sowohl mit dem Sensor (3) als auch mit den LED's (2) verbunden ist, um Veränderungen der durch den Sensor gemessenen Lichtenergie zu kompensieren.
